# EUROPÄISCHE PATENTSCHRIFT

(11) **EP 0 703 060 B1**
(45) Veröffentlichungstag und Bekanntmachung des Hinweises auf die Patenterteilung: **09.04.1997**
(21) Anmeldenummer: 95112817.2
(22) Anmeldetag: 16.08.1995
(51) Int. Cl.: B29C 51/26

(54) **Verfahren zum Austransportieren und Ablegen bzw. Stapeln von tiefgezogenen Formteilen und Vorrichtung zur Durchführung des Verfahrens**
Method for discharging and depositing or stacking of deepdrawn moulded objects and apparatus for carrying out such a method
Procédé pour décharger et déposer et/ou empiler des objets moulés emboutis et dispositif pour sa mise en oeuvre

(30) Priorität: 23.09.1994 DE 4433922
(43) Veröffentlichungstag der Anmeldung: 27.03.1996
(73) Patentinhaber: Adolf Illig Maschinenbau GmbH & Co, D-74081 Heilbronn (DE)
(72) Erfinder: Wagner, Hans Dieter, D-74626 Bretzfeld-Waldbach (DE); Landsperger, Hans, D-74080 Heilbronn (DE)

(56) Entgegenhaltungen:
- EP-A- 0 063 462
- DE-A- 2 518 340
- DE-A- 3 223 171

## Beschreibung

Die Erfindung betrifft ein verfahren zum Austransportieren und Ablegen bzw. Stapeln von aus einer erwärmten Platte aus thermoplastischem Kunststoff tiefgezogenen Formteilen nach der Gattung des Hauptanspruches sowie eine Vorrichtung zur Durchführung des Verfahrens.

Aus der EP-PS 00 63 462 ist ein Verfahren gemäß dem Oberbegriff des Anspruchs 1 bekannt, bei dem das Austransportieren der Formteile in einer zur horizontalen geneigten Lage bis in die Entnahmestation erfolgt. In dieser Entnahmestation schwenken die Formteile zusammen mit der Transporteinrichtung wieder in horizontale Lage. Dann erfolgt das Lösen der Formteile und diese fallen nach unten und können beispielsweise über ein Transportband weitertransportiert werden. In diesem Patentschrift ist weiterhin eine Vorrichtung beschrieben bestehend aus einer Zuführeinrichtung für Kunststoffplatten, einer Heizeinrichtung, einer Formstation, einer Entnahmestation und einer schwenkbaren, die Stationen verbindenden Transporteinrichtung, die zwischen Formstation und Entnahmestation endet.

Nachteilig ist bei diesem Verfahren, daß es eine Transporteinrichtung erfordert, die auch im gesamten Bereich der Entnahmestation verlaufen muß. Bei Maschinen mit Formflächen in Durchlaufrichtung von 2 m und größer ergeben sich insgesamt sehr lange Transporteinrichtungen, die heute in der Regel mit Transportketten versehen sind, die die Platte bzw. das Formteil am Rand erfassen. Lange Transportketten neigen zu Verzug und erfordern hohe Antriebsleistungen wegen der Reibung in den Führungsschienen. Solche Transporteinrichtungen sind teuer, da spezielle Führungsprofile erforderlich sind, die eine bestimmte Steifigkeit aufweisen müssen.

Aus diesen Gründen vertreibt die Patentanmelderin Thermoformmaschinen, bei denen die Transporteinrichtung nach der Formstation endet. Die Teile werden dort auf eine Rutsche ausgeschoben. Nachteilig ist hierbei, daß sie einen bestimmten Weg frei fallen und am Ende des Austransportes nur noch am Formteilende gehalten werden. Sie werden dabei einer Biegebeanspruchung unterworfen.

Der Erfindung liegt die Aufgabe zugrunde, das Verfahren gemäß Anspruch 1 zum Austransportieren von Formteilen mit einer Vorrichtung gemäß Anspruch 7 so auszuführen, daß die Transporteinrichtung nach der Formstation enden und ein geführtes Ablegen bzw. Stapeln der Formteile erfolgen kann. Dabei ist es erforderlich, dem Umstand Rechnung zu tragen, daß beim Austransportieren der Formteile die Transporteinrichtung schräg zur Horizontalen steht und das Ablegen der Formteile in der Regel horizontal erfolgen muß. Das Verfahren sollte auch bei bereits vorhandenen Formmaschinen mit hinter der Formstation endender Transporteinrichtung anwendbar sein nach entsprechender Nachrüstung der erforderlichen Teile. Eine Vorrichtung zur Durchführung des Verfahrens nach Anspruch 1 wird im Anspruch 7 beschrieben.

Zur Lösung der Aufgabe werden die kennzeichnenden Merkmale des Hauptanspruches vorgeschlagen. Durch Entkopplung der Überführung der Formteile in horizontale Lage von der Schwenkbewegung der Transporteinrichtung eröffnen sich mehrere Möglichkeiten des Überführens und des Ablegens/Stapelns der Formteile. Das Verfahren kann so entsprechend der Gestalt der Formteile ausgeführt werden, wenn diese aufeinander gestapelt werden sollen. Bevorzugte Ausführungen der Erfindung werden in den abhängigen Ansprüchen beschrieben.

Ein Ausführungsbeispiel des erfindungsgemäßen Verfahrens ist anhand der schematischen Zeichnungen, die die Vorrichtung zur Durchführung des Verfahrens zeigen, näher beschrieben.

Es zeigt:
- Figur 1 -: eine Längsdarstellung der Vorrichtung zur Durchführung des Verfahrens
- Figur 2 -: eine vergrößerte Längsdarstellung der Entnahmestation
- Figur 3 -: einen Querschnitt durch die Entnahmestation
- Figur 4 - 8: verschiedene Details und Ausführungsvarianten in vergrößerter Darstellung

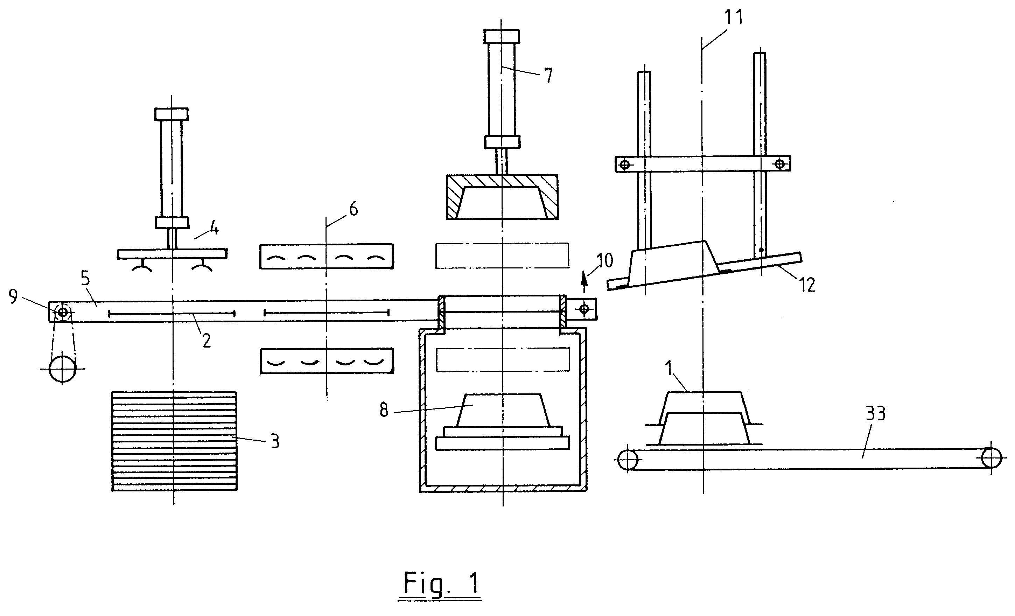

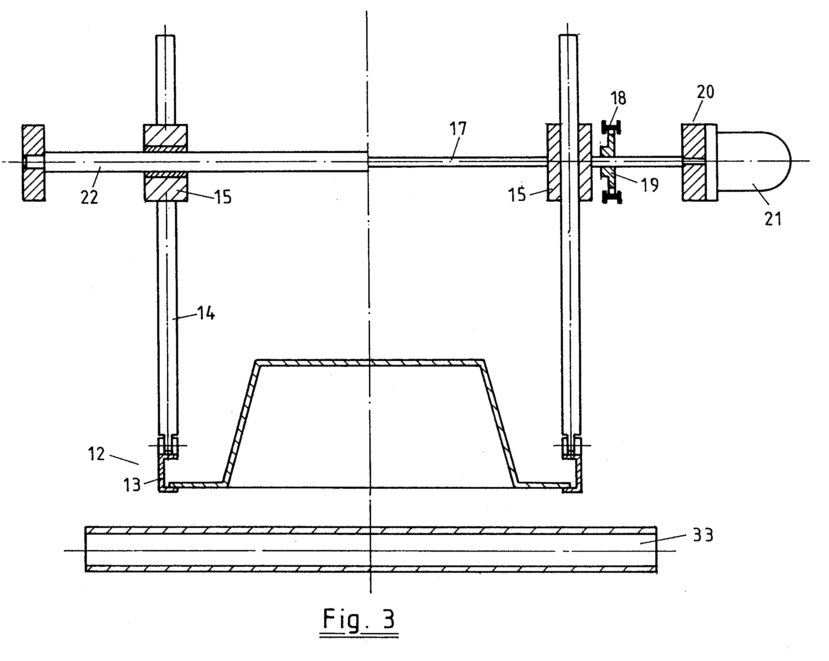

Figur 1 zeigt eine Vorrichtung zum Herstellen von tiefgezogenen Formteilen 1 aus Kunststoffplatten 2. Diese Platten 2 werden vom Stapel 3 mit einer Saugeinrichtung 4 einzeln abgehoben und in die Transporteinrichtung 5 eingeführt. Diese erfaßt die Platten 2 an zwei gegenüberliegenden Seiten, vorzugsweise über Transportketten mit Spitze, und führt sie taktweise zunächst in eine Heizstation 6, in der eine Vorerwärmung oder Enderwärmung erfolgt. In der nachfolgenden Formstation 7 erfolgt ggf. das Fertigbeheizen und das Verformen der Platten 2 mittels eines Tiefziehwerkzeuges 8 durch Differenzdruck. Um das Transportieren der warmen Platte 2 und der Formteile 1 störungsfrei ausführen zu können, ist die gesamte Transporteinrichtung 5 um den Drehpunkt 9 aus der Horizontalen in Pfeilrichtung 10 schwenkbar über nicht dargestellte Antriebe ausgebildet. In dieser Schräglage übergibt die nach der Formstation 7 endende Transporteinrichtung 5 die Formteile 1 an die Entnahmestation 11. Hierzu weist diese Schienen 12 auf, die der Aufnahme von zwei gegenüberliegenden Seitenrändern des Formteiles 2 dienen. Gemäß einer ersten Ausführungsform (Figur 3) bestehen diese beiden Schienen 2 aus U-förmigen Profilen 13. Sie hängen an je zwei Stangen 14, die an einer Traverse 15 höhenverschiebbar geführt sind. Dabei ist die Verbindung Schiene 12/Stange 14 als Gelenk ausgebildet, in der Weise, daß die Schienen 12 eine Schräglage zur Durchlaufrichtung einnehmen können, wie in Figur 1 dargestellt. Eine Höhenverschiebung der Stangen 14 erfolgt dadurch, daß diese auf einer Seite als Zahnstange ausgebildet sind, in denen ein Zahnrad 16 kämmt. Zwei Zahnräder 16 sind über eine Welle 17 verbunden, beide Wellen 17 verbinden ein Gleichlauf über Kette 18 und Kettenräder 19.

Eine der Wellen 17 wird von einem am Gestell 20 montierten Motor 21 angetrieben.

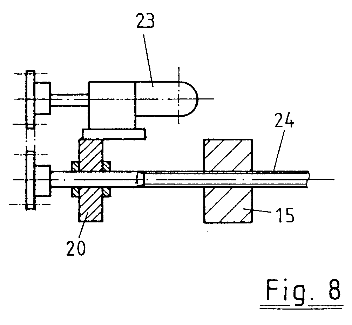

In Querrichtung verlaufende Führungsstangen 22 tragen die Traversen 15. Über einen Motor 23 wird eine Gewindespindel 24 mit Rechts-/Linksgewinde angetrieben (Fig. 8), so daß eine synchrone Querverschiebung der Traversen 15 auf den Führungsstangen 22 erfolgen kann. Der Motor 23 oder die Gewindespindel 24 stehen vorzugsweise mit einem Wegmeßsystem - absolut oder inkremental - in Verbindung, so daß die Lage der Schienen 12 von der Maschinensteuerung erfaßt und entsprechend verändert werden kann.

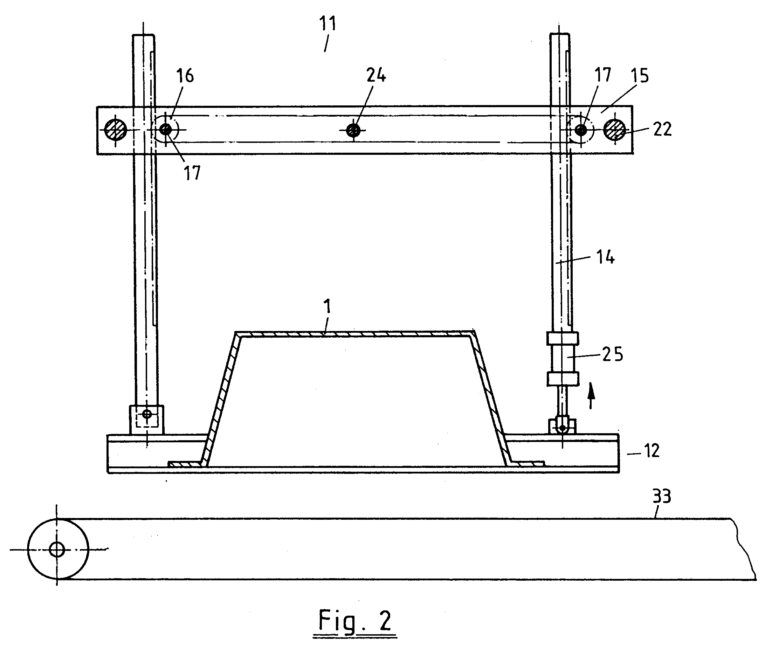

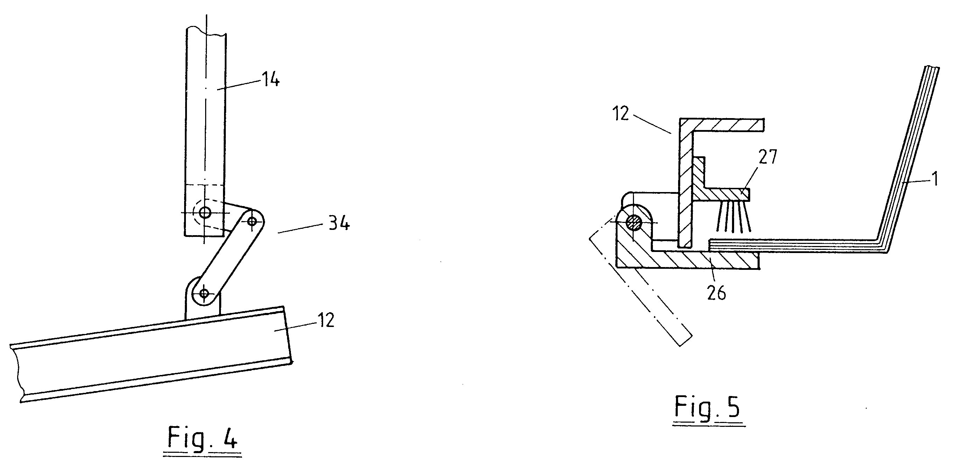

Bei dem in den Figuren 2 und 3 dargestellten gemeinsamen Antrieb der Stangen 14 sind Maßnahmen erforderlich, die Schienen 12 zwischen einer Schräglage (Fig. 1) und der Horizontalen zu verschieben. Dies kann, wie in Figur 2 rechts dargestellt, durch Einbau eines Hubelementes, z. B. in Form eines druckbetätigten Zylinders 25, erfolgen. Eine andere Möglichkeit ist in Figur 4 dargestellt. Hier erfolgt die Verbindung zwischen Stange 14 und der Schiene 12 über einen Kniehebel 34, der von einem nicht dargestellten Antrieb zwischen zwei Stellungen geschwenkt wird.

Eine andere Möglichkeit des Verschiebens der Schieben 14 zwischen der Horizontalen und der Schräglage kann auch dadurch realisiert werden, daß beide Wellen 17 von je einem eigenen Antrieb mit Wegmeßsystem angetrieben werden - also ohne Verbindung über Gleichlauf. Beide Motoren werden dann über die Maschinensteuerung so angesteuert, daß der gewünschte Bewegungsablauf der Schienen 12 - Schwenken oder parallel vertikal verfahren - stattfindet.

In Figur 5 ist eine andere Ausführungsform der Schienen 12 dargestellt. Die Unterseite wird dabei von einer Klappleiste 26 gebildet, die von einem nicht dargestellten Antrieb in die strichpunktierte Lage geschwenkt werden kann.

Wenn die Schienen 12 wie in den Figuren 5 und 3 dargestellt ausgeführt sind, ist es zweckmäßig, innerhalb der Schienen 12 Einrichtungen vorzusehen, die ein Zurückrutschen der übergebenen Formteile 1 verhindern, solange diese noch schräg stehen. Beispielsweise sind hier Bürsten 27 dargestellt (Figur 5), Rückfallklinken und andere Rückhalteorgane sind einsetzbar.

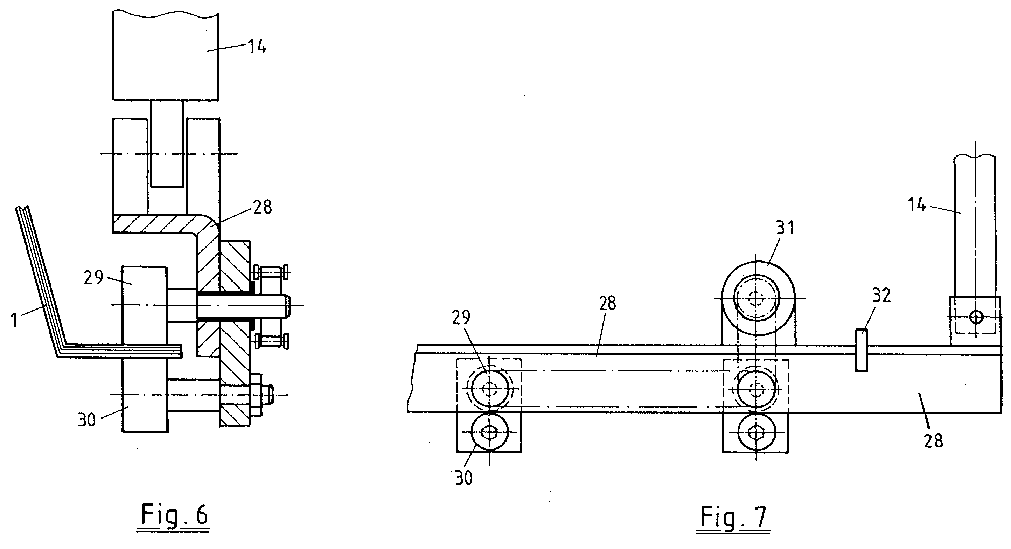

Figur 6 und Figur 7 zeigen eine andere vorteilhafte Ausbildung der Schienen 12. An einem Winkelprofil 28 sitzen in Durchlaufrichtung mehrere drehbare Rollen 29, 30, die den Rand des Formteiles 1 zwischen sich aufnehmen. Mindestens ein Teil der Rolle 29 ist angetrieben über einen Motor 31, so daß das Formteil 1 in eine definierte Lage gebracht werden kann. Hierzu ist ein Fühler 32, über den der Motor 31 abgeschaltet wird, oder auch nur ein einfacher Anschlag an den Schienen 12 angeordnet. Unabhängig von der Länge des Formteiles 1 steht seine Vorderkante dann immer in definierter Lage. Anstelle des Randes des Formteiles 1 kann auch seine Gestalt über einen Fühler/Anschlag abgefragt werden, da je nach Transporttoleranzen ein größerer oder kleinerer Rand am Formteil 1 entsteht. Wenn man die Formteile 1 beim Ablegen stapelt, ist je nach Teilegestalt die Formteillage zueinander mehr oder weniger wichtig.

Ein bevorzugter Verfahrensablauf findet in folgender Weise statt:

Nach dem Tiefziehen eines Formteiles 1 schwenkt die Transporteinrichtung nach oben in Pfeilrichtung 10 und überführt das Formteil 1 in die schrägstehenden Schienen 12. Gleichzeitig wird eine Platte 2 in die Formstation 7 überführt, die Transporteinrichtung 5 schwenkt nach unten in horizontale Lage. Unabhängig von der Lage der Transporteinrichtung 5 wird das in den Schienen 12 liegende Formteil 1 in horizontale Lage überführt und vertikal nach unten gefahren, bis es z. B. über einem Transportband 33 steht. Dabei kann wahlweise zuerst das Überführen in horizontale Lage und dann das vertikale Absenken erfolgen. Es kann auch erst das vertikale Absenken und dann das Schwenken in horizontale Lage stattfinden. Ebenso ist eine Überlagerung der beiden Bewegungen möglich. Die beiden letzt beschriebenen Verfahrensabläufe können vorteilhaft sein, wenn Formteile 1 ineinandergestapelt werden, die teilweise steile Seitenwände aufweisen.

Wenn die Formteile 1 auf dem Transportband 33 gestapelt werden, fahren die Schienen 12 einen unterschiedlichen vertikalen Hub. Dieser wird entweder in der Steuerung programmiert in Abhängigkeit der Teilezahl pro Stapel und des Abstandes zwischen zwei gestapelten Formteilen 1. Oder über einen Fühler wird das zuletzt abgelegte Formteil 1 oder das Transportband (beim ersten Teil) erfaßt und die Vertikalbewegung gestoppt. Haben die Schienen 12 die untere Lage erreicht, schwenken je nach Ausführung die Klappleisten 26 nach außen oder die Schienen 12 werden über den Motor 23 quer verfahren, bis das Formteil 1 nach unten fällt.

## Patentansprüche

1. Verfahren zum Austransportieren und Ablegen bzw. Stapeln von aus einer erwärmten Platte aus thermoplastischem Kunststoff tiefgezogenen Formteilen, die von einer Transporteinrichtung aus der Formstation in einer zur horizontalen geneigten Lage an eine Entnahmestation übergeben und dort wieder in horizontale Lage überführt und vertikal abgelegt bzw. gestapelt werden, dadurch gekennzeichnet, daß das Überführen der Formteile (1) in horizontale Lage in der Entnahmestation (11) unabhängig von der Schwenkbewegung der Transporteinrichtung (5) erfolgt.

2. Verfahren nach Anspruch 1 dadurch gekennzeichnet, daß das überführen der Formteile (1) in horizontale Lage vor der Vertikalbewegung zum Ablegen bzw. Stapeln erfolgt.

3. Verfahren nach Anspruch 1 dadurch gekennzeichnet, daß das überführen der Formteile (1) in horizontale Lage während der Vertikalbewegung zum Ablegen bzw. Stapeln erfolgt.

4. Verfahren nach Anspruch 1 dadurch gekennzeichnet, daß das überführen der Formteile (1) in horizontale Lage am Ende des Ablegens bzw. Stapelns erfolgt, wenn eine Kante des Formteils (1) bereits seine Endlage erreicht hat.

5. Verfahren nach einem der Ansprüche 1 bis 4 dadurch gekennzeichnet, daß das Formteil vor oder während des überführens in horizontale Lage auf eine definierte Lage in Vorschubrichtung betrachtet gebracht wird.

6. Verfahren nach einem der Ansprüche 1 bis 5 dadurch gekennzeichnet, daß die Vertikalbewegung der Formteile (1) in Abhängigkeit der Stapelhöhe der bereits auf einer Unterlage abgelegten Formteile (1) ausgeführt wird.

7. Vorrichtung zur Durchführung des Verfahrens nach Anspruch 1, bestehend aus einer Zuführeinrichtung für Kunststoffplatten, einer Heizeinrichtung, einer Formstation, einer Entnahmestation und einer schwenkbaren, die Stationen verbindenden Transporteinrichtung, die zwischen Formstation und Entnahmestation endet, wobei zwei in der Entnahmestation in Durchlaufrichtung verlaufende, im Bereich des Formteilrandes angeordnete Schienen (12), die zwischen einer horizontalen und einer zu dieser geneigten Lage sowie vertikal verschoben werden können.

8. Vorrichtung nach Anspruch 7 dadurch gekennzeichnet, daß bei zwei gegenüberliegenden, die Schienen (12) führenden und bewegenden Stangen (14) zwischen diesen und den Schienen (12) je ein Hubelement (25) eingebaut ist und die Vertikalbewegung der Stangen (14) über einen synchronen Antrieb (21) erfolgt.

9. Vorrichtung nach Anspruch 8 dadurch gekennzeichnet, daß das Hubelement (25) aus einem druckmittelbetätigten Zylinder besteht.

10. Vorrichtung nach Anspruch 8 dadurch gekennzeichnet, daß das Hubelement (25) aus einem angetriebenen Kniehebel (34) besteht.

11. Vorrichtung nach Anspruch 7 dadurch gekennzeichnet, daß jedes in Durchlaufrichtung aufeinanderfolgende Paar von Stangen (14) von einem eigenen Antrieb bewegt wird.

12. Vorrichtung nach Anspruch 11 dadurch gekennzeichnet, daß die beiden Antriebe mit einem Wegmeßsystem in Verbindung stehen.

13. Vorrichtung nach einem der Ansprüche 7 bis 12 dadurch gekennzeichnet, daß die Schienen (12) U-förmig und über einen Motor (23) quer verstellbar ausgebildet sind.

14. Vorrichtung nach einem der Ansprüche 7 bis 12 dadurch gekennzeichnet, daß die Schienen (12) an der Unterseite eine schwenkbare Klappleiste (26) aufweisen.

15. Vorrichtung nach einem der Ansprüche 7 bis 12 dadurch gekennzeichnet, daß die Schienen (12) mit Rollenpaaren (29, 30) versehen sind, die zumindest teilweise mit einer Antriebseinrichtung (31) in Wirkverbindung stehen.

16. Vorrichtung nach Anspruch 15 gekennzeichnet durch einen Anschlag oder Fühler (32) zur Begrenzung des Transportes der Formteile 1 durch die Rollenpaare (29, 30).

17. Vorrichtung nach einem der Ansprüche 7 bis 16 gekennzeichnet durch Rückhalteorgane (27) im Bereich der Schienen (12).

## Claims

1. Method for removing and depositing, or stacking, parts moulded from thermoplastic material from a heated plate, with the moulded parts in a horizontally inclined position being conveyed out of a moulding station and passed to a withdrawing station where they are returned to a horizontal position and vertically deposited, or stacked, so characterized that the procedure for returning the moulded parts (1) to a horizontal position in the withdrawing station (11) is executed independently of the tilting motion of the conveying device (5).

2. Method in accordance with Claim 1, so characterized that the procedure for returning the moulded part (1) to horizontal position is executed before the vertical movement for depositing or stacking is executed.

3. Method in accordance with Claim 1, so characterized that the procedure for returning the moulded part (1) to horizontal position is executed during the vertical movement for depositing or stacking.

4. Method in accordance with Claim 1, so characterized that the procedure for returning the moulded part (1) to horizontal position is executed at the conclusion of the depositing, or stacking procedure if one edge of the moulded part (1) has reached its final position.

5. Method in accordance with one of the Claims 1 through 4, so characterized that the moulded part is brought to a defined position as viewed from the direction of feed before or during the procedure for returning the moulded part to horizontal position.

6. Method in accordance with one of the Claims 1 through 5, so characterized that the vertical movement of the moulded parts (1) is executed depending on the stack height of the moulded parts (1) that are already deposited on a bed.

7. Device for executing the method in accordance with Claim 1, consisting of a feeding device for plastic plates, a heating device, a moulding station, a withdrawing station and an articulated conveying device that connects the stations and which terminates at a point between the moulding station and the withdrawing station, whereby two tracks (12) that are arranged on the withdrawing station and that run in the direction of through-put can be shifted between a horizontal position and a position inclined to this horizontal position, as well as vertically.

8. Device in accordance with Claim 7, so characterized that one lifting element (25) is integrated in each of two opposed bars (14) which guide and move the tracks (12), with each lifting element (25) arranged at a point between the bars (14) and the tracks (12), and that the vertical movement of the bars (14) is executed by means of a synchronous drive (21).

9. Device in accordance with Claim 8, so characterized that the lifting element (25) consists of a pressure medium-actuated cylinder.

10. Device in accordance with Claim 8, so characterized that the lifting element (25) consists of a driven articulated lever (34).

11. Device in accordance with Claim 7, so characterized that each successively arranged pair of bars (14) is moved exclusively by its own drive.

12. Device in accordance with Claim 11, so characterized that both drives are connected to a position measuring system.

13. Device in accordance with one of the Claims 7 through 12, so characterized that the tracks (12) are U-formed in shape and can be adjusted in their cross-wise arrangement by means of a motor (23).

14. Device in accordance with one of the Claims 7 through 12, so characterized that the bottom edge of the tracks (12) exhibits a hinged ledge (26).

15. Device in accordance with one of the Claims 7 through 12, so characterized that the tracks (12) are equipped with roller pairs (29, 30) that are linked at least partially with a driving device (31).

16. Device in accordance with Claim 15, characterized by a stop, or by a detecting device (32), for limiting the conveyance of the moulded parts (1) through the roller pairs (29, 30).

17. Device in accordance with one of the Claims 7 through 16, characterized by retaining devices (27) in the area of the tracks (12).

## Revendications

1. Procédé destiné à assurer le prélèvement et la dépose ou l'empilage de pièces qui, après avoir été thermoformées dans une plaque thermoplastique chauffée, sont transférées par un dispositif de transport, avec une certaine inclinaison par rapport à l'horizontale, de la station de formage vers une station de prélèvement qui les remet à l'horizontale et les dépose ou les empile à la verticale, caractérisé en ce que le replacement à l'horizontale des pièces thermoformées (1), au sein de la station de prélèvement (11), s'opère indépendamment du mouvement de basculement du dispositif de transport (5).

2. Procédé selon la revendication 1 caractérisé en ce que la mise à l'horizontale des pièces thermoformées (1) intervient avant le mouvement vertical de dépose ou d'empilage.

3. Procédé selon la revendication 1 caractérisé en ce que la mise à l'horizontale des pièces thermoformées (1) intervient pendant le mouvement vertical de dépose ou d'empilage.

4. Procédé selon la revendication 1 caractérisé en ce que la mise à l'horizontale des pièces thermoformées (1) intervient à la fin de la dépose ou de l'empilage, si une arête de la pièce thermoformée (1) est déjà arrivée en position de butée.

5. Procédé selon l'une des revendications 1 à 4 caractérisé en ce que la pièce thermoformée est amenée avant ou pendant sa mise à l'horizontale dans une position définie, vu dans le sens d'avancement.

6. Procédé selon l'une des revendications 1 à 5 caractérisé en ce que le déplacement vertical des pièces thermoformées (1) tient compte de la hauteur d'empilement des pièces thermoformées (1) déjà déposées sur un support.

7. Dispositif de mise en oeuvre du procédé selon la revendication 1, constitué d'un dispositif d'amenée de plaques plastiques, d'un dispositif de chauffage, d'une station de formage, d'une station de prélèvement et, pour relier les stations, d'un dispositif de transport inclinable se terminant entre la station de formage et la station de prélèvement, caractérisé en ce que la station de prélèvement comporte, dans le sens de trajet et en bordure de la pièce thermoformée, deux rails (2) inclinables par rapport à l'horizontale et déplaçables verticalement.

8. Dispositif selon la revendication 7, caractérisé en ce qu'il comporte, pour des rails (12) guidés et déplacés par deux barres (14) opposées, un organe de levage (25) placé entre l'une des barres (14) et le rail (12) et en ce que le déplacement vertical des barres (14) est piloté par un entraînement synchrone (21).

9. Dispositif selon la revendication 8, caractérisé en ce que l'organe de levage (25) est un vérin commandé par pression.

10. Dispositif selon la revendication 8, caractérisé en ce que l'organe de levage (25) est un levier à genouillère entraîné.

11. Dispositif selon la revendication 7, caractérisé en ce que chaque paire de barres (14) successives, vu dans le sens de trajet, possède son propre entraînement.

12. Dispositif selon la revendication 11, caractérisé en ce que les deux entraînements sont reliés entre eux par le biais d'un système de mesure de déplacement.

13. Dispositif selon l'une des revendications 7 à 12, caractérisé en ce que les rails (12) ont un profil en U et peuvent être déplacés dans le sens transversal au moyen d'un moteur (23).

14. Dispositif selon l'une des revendications 7 à 12, caractérisé en ce que les rails (12) possèdent sur le dessous une réglette pivotante (26).

15. Dispositif selon l'une des revendications 7 à 12, caractérisé en ce que les rails (12) sont pourvus de paires de roulettes (29, 30) au moins en partie reliées à un dispositif d'entraînement (31).

16. Dispositif selon la revendication 15, caractérisé par la présence d'une butée ou d'un palpeur (32) permettant de limiter le transport des pièces thermoformées 1 par les paires de roulettes (29, 30).

17. Dispositif selon l'une des revendications 7 à 16, caractérisé par la présence d'organes de retenue (27) dans la zone des rails (12).
